# EUROPEAN PATENT SPECIFICATION

(11) **EP 1 801 078 B1**
(45) Date of publication and mention of the grant of the patent: **12.11.2008**
(21) Application number: 05425909.8
(22) Date of filing: 23.12.2005
(51) Int. Cl.: C02F 9/00, C02F 9/02, C02F 9/04, B01D 61/58

(54) **Apparatus for purification treatment of drinking water and process therefor**
Verfahren und Vorrichtung zur Behandlung von Trinkwasser
Dispositif et méthode de purification d'eau potable

(43) Date of publication of application: 27.06.2007
(73) Proprietor: ENIA S.P.A., 43100 Parma (IT)
(72) Inventor: Carapezzi, Giuliano, 42100 Reggio Emilia (IT)
(74) Representative: Gotra, Stefano

(56) References cited:
- US-A- 5 911 884
- PATENT ABSTRACTS OF JAPAN vol. 1999, no. 13, 30 November 1999 (1999-11-30) & JP 11 207391 A (ZOOM:KK), 3 August 1999 (1999-08-03)
- PATENT ABSTRACTS OF JAPAN vol. 1998, no. 08, 30 June 1998 (1998-06-30) & JP 10 066971 A (TORAY IND INC), 10 March 1998 (1998-03-10)
- DATABASE WPI Derwent Publications Ltd., London, GB; AN 1995-084664 XP002380858 "Portable water purificn. system for prodn. of microorganism free aq. soln. - comprises filter, means and adsorption of chlorine and dissolved organic contaminants, reverse osmotic separator, etc." & JP 07 008996 A (MILLIPORE CORP) 13 January 1995 (1995-01-13)
- S. MABIC, C. REGNAULT, I. KANO, E. CASTILLO, D. DABOURET: "Targeting Water Purification Technologies to Specific Applications" AMERICAN LABORATORY NEWS, August 2004 (2004-08), XP002380385

## Description

The term purification in the present application relates to the elimination of organic substances, and suspended substances in general, and bringing the values of the hardness of the water within an optimal parameter (i.e. between 15 and 20°f), removal of nitrates well below the value of 50 ppm as recommended in the existing legislation (CE directive no. 98/83); and a guarantee of maintaining the sterility of the water dispensing valve mouth.

Apparatus available on the market at present include the use singly or in combination of treatment systems of the mechanical or sedimentary filtration type, activated carbon filtration, membrane filtration including inverse osmosis, nano-filtration, ultra-filtration and micro-filtration, ionic exchange and ultra-violet radiation.

These apparatus are generally not very flexible and not capable of customising the treatment in accordance with the characteristics of the water to be treated or the needs of the consumer.

For example, according to the location of the wells, i.e. mountain, hill, plain, the water characteristics of the municipal supply are considerably different, especially in relation to the hardness, the saline content, the suspended substances and the bacterial situation, and so on.

Also, the consumers' needs may be different according to their ages, their state of health and their diet.

These prior art apparatus are generally installed below a sink, with one domestic user, and are of varying degrees of complexity and performance.

For example, US patent US 6,197,193, having as title "Drinking water filter", describes a multi-stage filter for water coming from the municipal supply, to be inserted between the supply and the dispensing tap. The device is able to separate a large portion of sediment in the water, but has no effect on the water hardness, nor on the saline content, nor on the organic substances and the bacterial levels. Furthermore, during the course of its use, experience has taught that bacteria colonies grow internally of the filter, resulting in an increase in the quantities of bacteria in the treated water; in conclusion, from the micro-biological point of view the quality of the treated water is worse on exiting the filter than it was on entering.

Sometimes the filtration treatment also includes a carbonating treatment, which on the one hand satisfies some needs of the consumer but on the other hand adds nothing to the quality of the treated water. For example, US patent US 5,021,250 "Apparatus and method for dispensing purified and carbonated liquids", apart from the known filtration treatment, includes a carbonation treatment which is accompanied by a reserve tank therefor.

Many water purification plants include a storage stage, which has the aim of dispensing high quantities of water at certain times when required, while at other times demand is low.

US Patent US 4,609,466 entitled "Portable water purification system" includes a treatment constituted by: pre-filtering; inverse osmosis treatment for reduction of salinity and hardness; post-filtering with activated carbon and, finally, storage tanks for the treated water.

JP Patent JP 100 66 971 "Pure water producing device and production of pure water" includes an apparatus constituted by a prefilter, a bypassed RO-unit and a postfilter.

The plants with storage of treated water exhibit the important drawback of providing shelter for bacterial colonies in the storage tanks, and thus certainly do not guarantee the sterility of the water used by the user, as often the bacterial content of the water is worse than the water entering the plant.

Attempts have been made to obviate this drawback by performing bacteriostatic treatment using UV lamps in the storage tanks, but this solution has not resolved the problem of guaranteeing an effective sterility of the dispensed water.

A third drawback exists in known treatment plants for municipal supply water.

This drawback is known as "retro-contamination" and occurs in the final and terminal tract of the conduit, i.e. the conduit connecting the under-sink plant to the dispensing valve.

Even where it is possible to control the bacterial levels of the water in the under-sink plant treated water, the final conduit tract connecting the plant to the tap is outside the ambit of this control and is polluted by external bacterial agents, for example those present on the tap mouth, which are then diffused internally of the conduit and colonise there.

This retro-contamination phenomenon is even more present in the plants (such as US 6,464,871 "Faucet assembly with a filtering device disposed in a faucet body") that include a generic filtering cartridge in proximity of the tap mouth, as the bacterial retro-contamination takes in the whole environment of the chamber housing the filter.

The use of the filtering cartridge located close to the tap mouth reduces the overall mass of the apparatus but does not address or solve the problem of bacterial retro-contamination.

The main aim of the present invention is to provide a treatment apparatus for municipal supply drinking water which obviates the above-listed drawbacks, and which is able to purify the characteristics of the water dispensed in terms of hardness, salinity and taste, at the same time guaranteeing excellent characteristics with regard to bacterial content.

A further aim is to contain energy consumption and waste of water.

A further aim is to obtain a flexible apparatus which is easily adaptable to the different qualities of the waters provided by various municipal supplies, for example in different geographical areas such as mountains, hills and plains.

A last but not least aim is to guarantee the sterility of the dispensed water without injecting disinfectants or bacteriostatic agents, such as for example chlorine products, which alter the taste and fragrance of the water.

The above aims are all attained by means of the indications contained in claim 1 and dependent claims appended to the present description.

The invention will be clearly described in the following non-limiting embodiment, provided by way of example, of a process and under-sink plant for water purification, accompanied by the figures of the drawings, in which:
Figure 1 illustrates, with a block diagram, the sequential diagram of a prior art purification plant for domestic drinkable water supply;
Figure 2 is a block diagram of a first embodiment of the plant of figure 1;
Figure 3 is a block diagram of a second embodiment of the plant of figure 2;
Figure 4 is a hydraulic diagram of the schematically-illustrated plant of figure 3;
Figure 5 is a hydraulic diagram of the plant of figure 3 located below a sink.

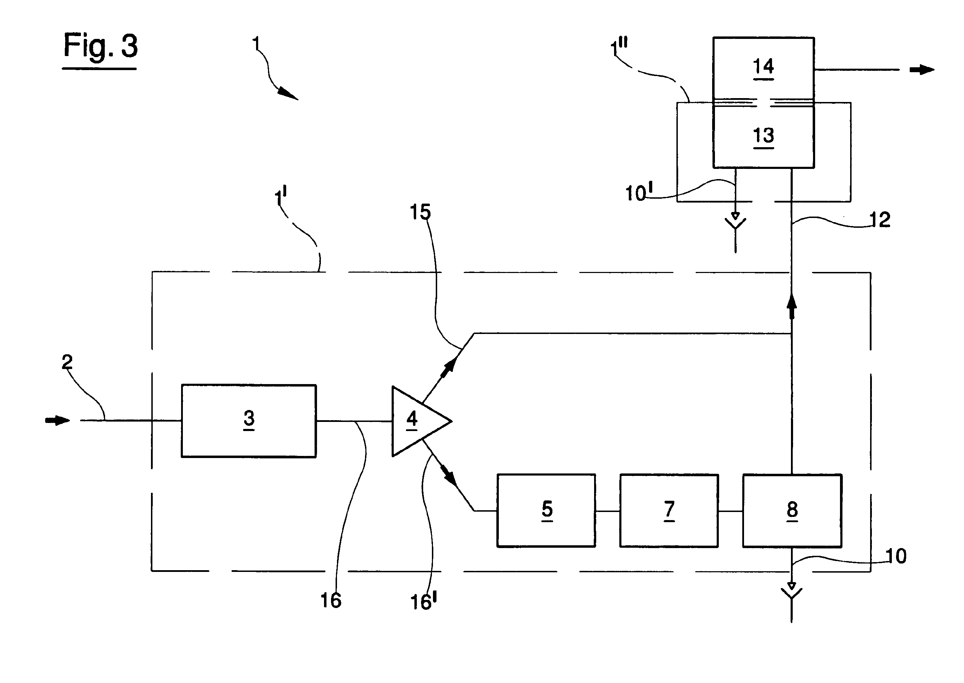

The figures 3, 4 and 5 illustrate embodiments according to the invention.

With reference to the figures of the drawings, 1 denotes in its entirety a plant for domestic water supply purification treatment.

The plant 1 includes a water supply conduit 2 in hydraulic communication with means for separating 1', which are in turn hydraulically connected, through a second conduit 12, to means for purifying 1" adjacent to a valve 14 for water dispensing.

While the means for separating 1' operate a physical separation of solid substances from the water, the means for purifying 1" perform a micro-biological filtering of the water coming from the means for separating 1'.

The direct connection of the means for purifying 1" to the valve 14, with no interpositioning of hydraulic conduits, prevents bacterial retro-contamination upstream of the valve 14.

The means for separating 1' include a first pre-filtering station 3 located downstream of the supply conduit 2, hydraulically connected via a first conduit 16 to a second diaphragm filtering station 8. The pre-filtering station 3, destined to treat the solid substances suspended in the water, such as sand or clay and organic substances in colloid state, is defined by a plurality of filtering layers.

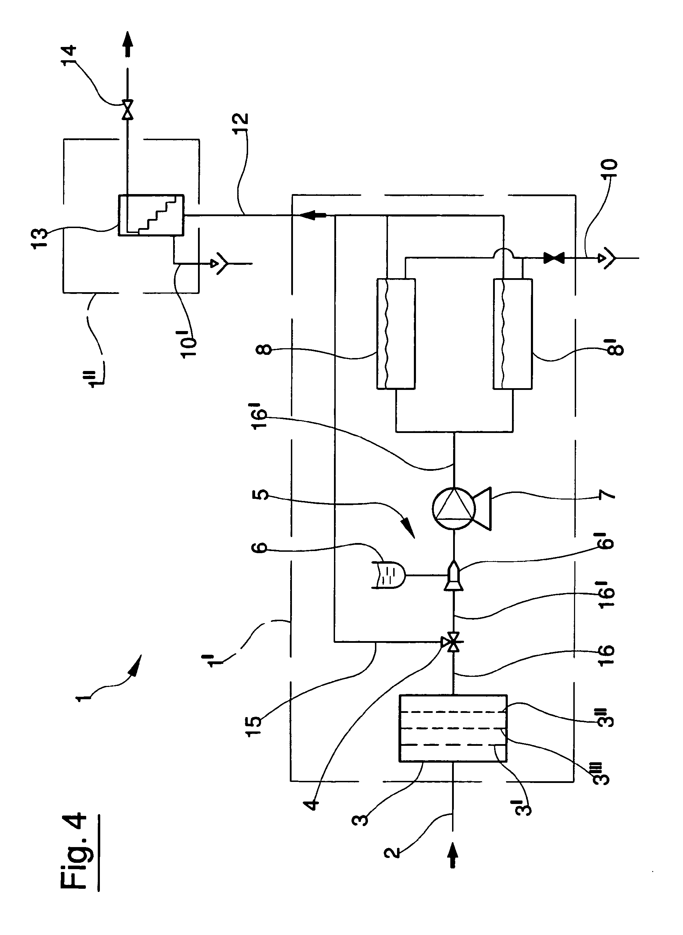

As illustrated in the embodiment of figure 4, a first mechanical filter 3' is included and exhibits a reticular net with pore diameter comprised between 50µ and 20µ, preferably 20µ, a second mechanical filter 3" exhibiting a reticular net with pore diameter comprised between 5µ and 20µ, preferably 5µ, and a third filter 3'" with activated carbon.

The third activated carbon filter 3'" is interpositioned between the other two, respective downstream of the first mechanical filter 3' and upstream of the second mechanical filter.

The second diaphragm filtering station 8, which performs the physical separation of substances dissolved in the water, is preferably of the inverse osmotic type with a high permeability surface, preferably around 2.5m².

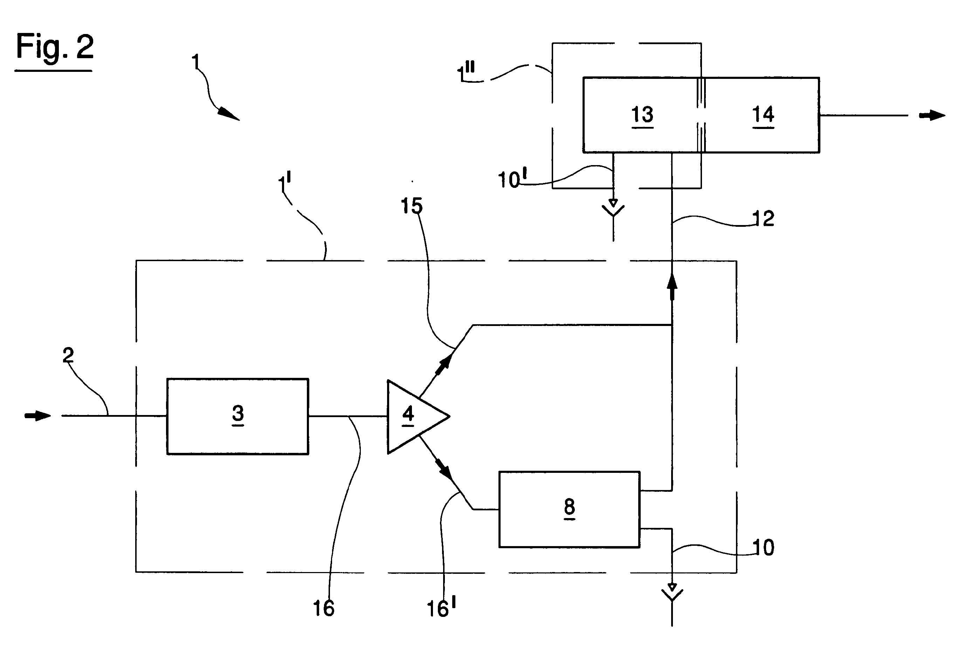

The means for purifying 1" are defined by a third ultra-filtration station 13. As can be seen in figure 2, the plant 1 includes a shunt valve 4, hydraulically interpositioned between the first prefiltering station 3 and the second diaphragm filtering station 8.

The shunt valve 4, preferably three-way, exhibits an inlet, connected to the first conduit 16, a first outlet, hydraulically connected to a third conduit 16' terminating internally of the second diaphragm filtering station 8, and a second outlet which is hydraulically connected to a by-pass conduit 15 terminating downstream of the second diaphragm filtering station 8 at the second conduit 12.

The shunt valve 4 also has the aim of enabling the plant to be configured according to the local characteristics of the water to be treated by dividing the water to be treated into the by-pass conduit 15 and the third conduit 16'. For example, if the water to be treated is especially hard, the shunt valve 4 is regulated so that the flow in the by-pass 15 is moderate; for medium-hard water the flow in the by-pass 15 is high in order that optimal water salinity can be obtained in the second conduit 12.

At the third conduit 16', the apparatus 1 of figure 3 includes a dosing station 5, upstream of the second diaphragm filtering station 8, and a pumping station 7.

The dosing station 5 is defined by a tank 6 of anti-precipitate liquid, connected to a proportional doser 6' to enable a dosing of the anti-precipitate liquid internally of the third conduit 16'.

The doser 6' is preferably an aspiration doser operating on the venturi tube principle, giving a dosage of between 1 and 3 ppm of an anti-precipitate, such as for example polyacrylates and/or hexametaphosphates and/or phosphites.

The aim of the dosing of the anti-precipitate is to enable the osmotic diaphragm to function to high levels over a long working life, even where the water under treatment is very hard, while at the same time reducing water discharge rates and thus saving waste of water.

This leads to high factor recuperation R, where R% = (permeated flow/supply flow) x 100.

This R value will remain high over time, about 50% for the dosing action which will keep the functional capacity of the diaphragm constant. This is true also for very hard waters, which by their nature would tend to precipitate, damaging the functional capacity of the osmotic membrane.

The pumping station 7 is hydraulically interpositioned downstream of the shunt valve 4 and upstream of the second diaphragm filtering station 8.

In the detail of figure 3 the pumping station 7, operating in a range of pressure of between 5 and 10 bar, can be seen to be hydraulically interpositioned between the dosing station 5 and the second diaphragm filtering station 8.

To reach a high level of osmotic permeability the diaphragm filtering station 8 can advantageously be constituted by a pair of osmotic membranes 8, 8', connected to one another in parallel.

Each osmotic membrane 8, 8' exhibits an inlet connected to the third conduit 16', an outlet connected to the second conduit 12 and a discharge connected to a first discharge conduit 10.

The molecular weight of the osmotic membranes is preferably about 200 MW.

To prevent propagation of a possible bacterial retro-contamination the third ultra-filtration station 13 exhibits an inlet which is connected to the second conduit 12, a discharge which is connected to a second discharge conduit 10' and an outlet which is directly connected to the dispensing valve 14.

To obtain this result the molecular weight of the ultrafilter should be of between 5,000 and 20,000 MW.

Experiments have demonstrated that, with the above specifications, the flow rate through the pair of osmotic membranes 8, 8' and sent on to the second conduit 12 is of between 60 and 100 litres per hour, and thus can be directly used, with no need for a storage tank.

This is obtained thanks to the combined action of three factors, i.e. the pumping of the water by the pumping station 7, which raises the pressure up to between 5 and 10 bar; the anti-precipitate addition at the dosing station 5; and the use of a large area of interface surface in the pair of osmotic membranes 8, 8'.

A third membrane stage could be included on the by-pass 15 conduit, preferably an ultrafiltration stage.

The purification treatment process of the water includes a third water treatment stage in inlet to the supply conduit 2 through the means for filtering 1'.

The stage includes the separation of especially the solid substances from the water.

Thereafter the water is purified by the means for purifying 1", microbiologically ridding the water of organic substances, viruses and bacteria present in the water coming from the means for filtering 1'.

The purification stage is done directly before the stage of water dispensing through the valve 14.

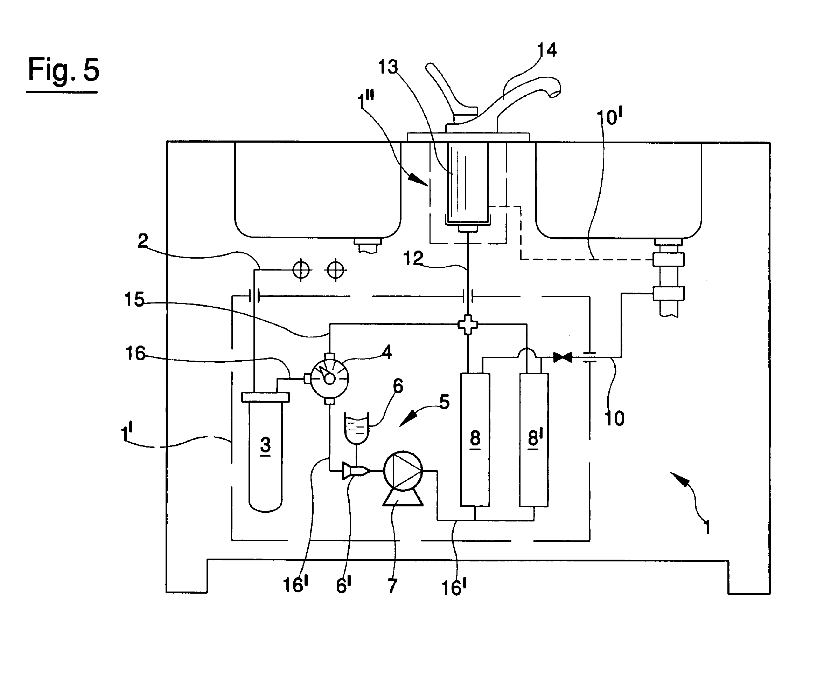

The plant operates as illustrated in figures 4 and 5, and as follows.

The water coming from the municipal supply 2 is first filtered at the first pre-filtering station 3 and reaches a shunt valve 4 where it is divided into a first flow into the third conduit 16', for the osmotic treatment, and a second flow into the by-pass conduit 15.

The shunt valve 4 can be regulated according to the characteristics of the water to be treated.

The water to be osmotically treated is added to with a small dose of anti-precipitate, at around 1 to 3 parts per million (ppm) by the doser 6' and is pumped by the pumping station 7.

The pumped water reaches the inverse osmosis treatment section 8, 8' and exits in a treated form into the second conduit 12.

The water back-flowing from the osmotic treatment section is discharged through the first discharge conduit 10.

The water treated by the means for filtering 1' reaches the dispensing valve 14, first passing through the means for purifying 1", i.e. the third ultrafiltration station 13, which blocks any pathogenic or organic agents, stopping them from reaching the valve 14.

The molecular weight of the third ultrafiltration station 13 does not allow passage of organic or pathogenic agents such as bacteria or viruses.

Thus the problem of retro-contamination is obviated, guaranteeing sterile water.

The invention has the further advantage of great flexibility, as it can treat waters having various degrees of hardness and salinity in general, thanks to having a variable by-pass by virtue of the shunt valve 4. All of the components of the means for filtering 1' are assembled in a single plant that can be installed below-sink, to which three simple hydraulic connections flow, constituted by the supply conduit 2, the treated water conduit 12 and the discharge conduit 10.

In place of the inverse osmosis treatment, a nano-filtration diaphragm treatment can be performed in the second diaphragm filtering station 8, with a diaphragm of molecular weight of around 300MW.

The plant includes known electrical supply connections to the pumping station 7, and includes controls and alarms, not illustrated in figure 2.

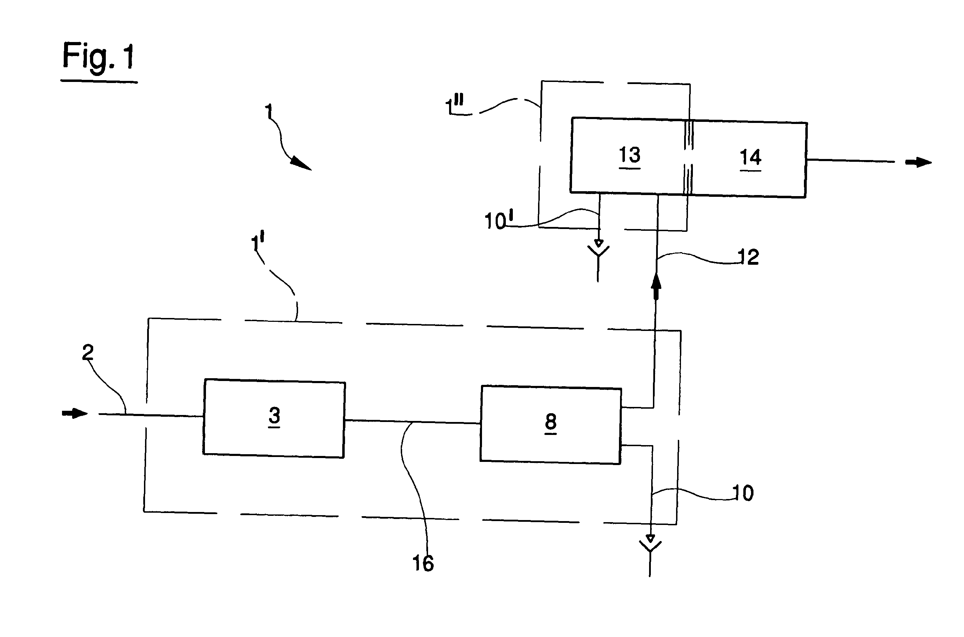

The plant described and illustrated in figures 1 to 5 can be added to with known-type carbonation treatments and with refrigeration treatments too, not illustrated in the figures of the drawings.

Other complementary apparatus can be included, also not illustrated, such as, for example, a conductivity meter for immediate control of the treat water quality, as well as a litre counter.

The invention avoids all storage of treated water, and provides high-quality water in terms of taste characteristics and microbiological status, and resolves the problem of bacterial retro-contamination.

## Claims

1. An apparatus for a purification treatment for domestic drinking water, comprising:
a supply conduit (2) from which non-treated drinking water is supplied; means for separating (1') for physically separating solid substances from the water, located downstream of the supply conduit (2), and presenting a first pre-filtering station (3), located downstream of the supply conduit (2), which in particular physically separates solid substances suspended in the water, a second diaphragm filtering station (8), for physically separating substances dissolved in the water, which second diaphragm filtering station (8) is in hydraulic communication with the first prefiltering station (3) via a first conduit (16);
a dispensing valve (14) for dispensing treated water, which valve (14) is hydraulically connected to the means for separating (1') via a second conduit (12);
means for purifying (1"), located downstream of the means for separating (1') and directly connected, without any interpositioning of hydraulic conduits, to the valve (14) in order to prevent bacterial retro-contamination upstream of the valve (14), said means for purifying (1") being embodied by a third ultrafiltration station (13);
**characterized in that** it further comprises:
a shunt valve (4), hydraulically interpositioned between the first prefiltering station (3) and the second diaphragm filtering station (8), for separating inletting water between the second diaphragm filtering station (8) and the ultrafiltration station (13), and exhibition an inlet, connected to the first conduit (16), a first outlet, hydraulically
connected to a third conduit (16') terminating internally of the second diaphragm filtering station (8), and a second outlet, hydraulically connected to a by-pass conduit (15) terminating downstream of the second diaphragm filtering station (8);
and a dosing station (5) for reducing a discharge flow and for improving a working life of the second diaphragm filtering station (8) located upstream of the second diaphragm filtering station (8) and being hydraulically connected to the third conduit (16'), said dosing station (5) having a tank (6) containing an anti-precipitate liquid and a doser (6') connected to the tank (6) for enabling dosing of the anti-precipitate liquid internally of the third conduit (16').

2. The apparatus of claim 1, **characterised in that** it further comprises a pumping station (7) which is hydraulically interpositioned downstream of the shunt valve (4) and upstream of the second diaphragm filtering station (8).

3. The apparatus of claim 2,**characterised in that** the pumping station (7), is hydraulically interpositioned between the dosing station (5) and the second diaphragm filtering station (8) for pumping at a pressure comprised between 5 and 10 bar.

4. The apparatus of claim 1, **characterised in that** the pre-filtering station (3) comprises:
a first mechanical filter (3') exhibiting a net having pore diameters of between 50µ and 20µ;
a second mechanical filter (3") exhibiting a net having pore diameters of between 5µ and 15µ;
a third activated carbon filter (3"') interpositioned downstream of the first mechanical filter (3') and upstream of the second mechanical filter (3").

5. The apparatus of claim 1, **characterised in that** the second diaphragm filtering station (8) is preferably of an inverse osmotic type with a large permeability surface, preferably about 2.5 square metres.

6. The apparatus of claim 1, **characterised in that** the second diaphragm filtering station (8) is constituted by two inverse osmosis units located in parallel and each exhibiting an inlet which is connected to a third conduit (16'), an outlet connected to the second conduit (12) and a discharge connected to a first discharge conduit (10).

7. The apparatus of claim 1, **characterised in that** the third ultrafiltration station (13) comprises a membrane and exhibits an inlet connected to the second conduit (12), an outlet directly connected to the dispensing valve (14) and a discharge connected to a second discharge conduit (10').

## Patentansprüche

1. Vorrichtung zur Behandlung von Trinkwasser, enthaltend:
- eine Netzleitung (2), aus welcher nicht behandeltes Trinkwasser zugeführt wird;
- Abscheidungsmittel (1') zum physischen Abscheiden fester Substanzen von dem Wasser, angeordnet stromabwärts der Netzleitung (2) und eine erste Vorfilterstation (3) aufweisend, angeordnet stromabwärts der Netzleitung (2), welche insbesondere physisch die im Wasser schwebenden festen Substanzen abscheidet, eine zweite Membranfilterstation (8) zum physischen Abscheiden von im Wasser aufgelösten Substanzen, welche zweite Membranfilterstation (8) über eine erste Leitung (16) in hydraulischer Verbindung mit der ersten Vorfilterstation (3) steht;
- ein Abgabeventil (14) zur Abgabe von behandeltem Wasser, welches Ventil (14) über eine zweite Leitung (12) hydraulisch an die Abscheidungsmittel (1') angeschlossen ist;
- Klärmittel (1"), angeordnet stromabwärts der Abscheidungsmittel (1') und ohne jedes Zwischensetzen von hydraulischen Leitungen direkt an das Ventil (14) angeschlossen, um eine rückwirkende bakterielle Kontaminierung stromaufwärts des Ventils (14) zu verhindern, wobei die genannten Klärmittel (1") durch eine dritte Ultrafiltrationsstation (13) gebildet sind;
- ein Ableitventil (4), hydraulisch eingesetzt zwischen der ersten Vorfilterstation (3) und der zweiten Membranfilterstation (8), um das einlaufende Wasser zwischen der zweiten Membranfilterstation (8) und der Ultrafiltrationsstation (13) zu trennen, und einen Einlass aufweisend, angeschlossen an die erste Leitung (16), einen ersten Auslass, hydraulisch angeschlossen an eine dritte Leitung (16'), die im Inneren der zweiten Membranfilterstation (8) mündet, und einen zweiten Auslass, hydraulisch angeschlossen an eine Bypass-Leitung (15), die stromabwärts der zweiten Membranfilterstation (8) mündet;
- und eine Dosierstation (5) zum Reduzieren des Ablassflusses und zum Verbessern der Lebensdauer der zweiten Membranfilterstation (8), angeordnet stromaufwärts der zweiten Membranfilterstation (8) und hydraulisch an die dritte Leitung (16') angeschlossen, wobei die genannte Dosierstation (5) einen Behälter (6) aufweist, der eine Flüssigkeit gegen Ablagerungen enthält, sowie einen Dosierer (6'), angeschlossen an den Behälter (6), um die Dosierung der Flüssigkeit gegen Ablagerungen im Inneren der dritten Leitung (16') zu erlauben.

2. Vorrichtung nach Patentanspruch 1, **dadurch gekennzeichnet, dass** sie ausserdem eine Pumpstation (7) enthält, welche hydraulisch stromabwärts des Ableitventils (4) und stromaufwärts der zweiten Membranfilterstation (8) eingesetzt ist.

3. Vorrichtung nach Patentanspruch 2, **dadurch gekennzeichnet, dass** die Pumpstation (7) hydraulisch zwischen der Dosierstation (5) und der zweiten Membranfilterstation (8) eingesetzt ist, um mit einem Pumpdruck zu arbeiten, der zwischen 5 und 10 bar enthalten ist.

4. Vorrichtung nach Patentanspruch 1, **dadurch gekennzeichnet, dass** die Vorfilterstation (3) wie folgt enthält:
- einen ersten mechanischen Filter (3'), der ein Netz auf weist, dessen Poren Durchmesser haben, die zwischen 50µ und 20µ liegen;
- einen zweiten mechanischen Filter (3"), der ein Netz aufweist, dessen Poren Durchmesser haben, die zwischen 5µ und 15µ liegen;
- einen dritten aktivierten Kohlefilter (3"'), eingesetzt stromabwärts des ersten mechanischen Filters (3') und stromaufwärts des zweiten mechanischen Filters (3").

5. Vorrichtung nach Patentanspruch 1, **dadurch gekennzeichnet, dass** die zweite Membranfilterstation (8) vorzugsweise vom Typ mit umgekehrter Osmose ist, und zwar mit einer grossen durchlässigen Oberfläche, vorzugsweise um 2.5 Quadratmeter.

6. Vorrichtung nach Patentanspruch 1, **dadurch gekennzeichnet, dass** die zweite Membranfilterstation (8) aus zwei Einheiten mit umgekehrter Osmose gebildet ist, angeordnet parallel zueinander und jede einen Einlass aufweisend, welcher an eine dritte Leitung (16') angeschlossen ist, einen an die zweite Leitung (12) angeschlossenen Auslass und einen an eine erste Ablassleitung (10) angeschlossenen Auslass.

7. Vorrichtung nach Patentanspruch 1, **dadurch gekennzeichnet, dass** die dritte Ultrafiltrationsstation (13) eine Membrane enthält und einen Einlass aufweist, angeschlossen an die zweite Leitung (12), einen direkt an das Abgabeventil (14) angeschlossenen Auslass und einen an eine zweite Ablassleitung (10') angeschlossenen Auslass.

## Revendications

1. Dispositif de purification d'eau potable domestique, comprenant:
- un conduit d'alimentation (2) duquel provient de l'eau potable non traitée;
- des moyens de séparation (1') pour séparer physiquement des substances solides de l'eau, disposés en aval du conduit d'alimentation (2), et présentant une première station de pré-filtration (3), située en aval du conduit d'alimentation (2), qui en particulier sépare physiquement les substances solides en suspension dans l'eau, une seconde station de filtration à diaphragme (8), pour séparer physiquement les substances dissoutes dans l'eau, laquelle seconde station de filtration à diaphragme (8) est en communication hydraulique avec la première station de pré-filtration (3) au travers d'un premier conduit (16);
- une valve de distribution (14) pour distribuer de l'eau traitée, laquelle valve (14) est hydrauliquement connectée aux moyens de séparation (1') au travers d'un second conduit (12);
- des moyens de purification (1"), situés en aval des moyens de séparation (1') et directement connectés, sans aucune interposition de conduits hydrauliques, à la valve (14) de manière à prévenir une rétro-contamination bactériale en amont de la valve (14), lesdits moyens de purification (1") étant constitués par une troisième station d'ultrafiltration (13);
**caractérisé en ce qu'**il comprend de plus:
- une valve de dérivation (4), hydrauliquement interposée entre la première station de pré-filtration (3) et la seconde station de filtration à diaphragme (8), pour séparer l'eau entrante entre la seconde station de filtration à diaphragme (8) et la station d'ultrafiltration (13), et présentant une entrée, connectée au premier conduit (16), une première sortie, hydrauliquement connectée à un troisième conduit (16') terminant intérieurement à la seconde station de filtration à diaphragme (8), et une seconde sortie, hydrauliquement connectée à un conduit de dérivation (15) débouchant en aval de la seconde station de filtration à diaphragme (8);
- et une station de dosage (5) pour réduire un débit d'évacuation et pour augmenter la durée de travail de la seconde station de filtration à diaphragme (8), située en amont de la seconde station de filtration à diaphragme (8) et étant hydrauliquement connectée au troisième conduit (16'), ladite station de dosage (5) ayant un réservoir (6) contenant un liquide anti-précipitant et un doseur (6') connecté au réservoir (6) pour permettre un dosage du liquide anti-précipitant à l'intérieur du troisième conduit (16').

2. Dispositif selon la revendication 1, **caractérisé en ce qu'**il comprend en outre une station de pompage (7) hydrauliquement interposée en aval de la valve de dérivation (4) et en amont de la seconde station de filtration à diaphragme (8).

3. Dispositif selon la revendication 2, **caractérisé en ce que** la station de pompage (7) est hydrauliquement interposée entre la station de dosage (5) et la seconde station de filtration à diaphragme (8) pour un pompage selon une pression comprise entre 5 et 10 bars.

4. Dispositif selon la revendication 1, **caractérisé en ce que** la station de pré-filtration (3) comprend:
- un premier filtre mécanique (3') présentant une maille réticulaire avec des diamètres de pores compris entre 50µ et 20µ;
- un second filtre mécanique (3") présentant une maille réticulaire avec des diamètres de pores compris entre 5µ et 15µ;
- un troisième filtre à charbon actif (3"') interposé en aval du premier filtre mécanique (3') et en amont du second filtre mécanique (3").

5. Dispositif selon la revendication 1, **caractérisé en ce que** la seconde station de filtration à diaphragme (8) est préférablement de type osmotique inversé avec une grande surface de perméabilité, préférablement d'environ 2,5 mètres carrés.

6. Dispositif selon la revendication 1, **caractérisé en ce que** la seconde station de filtration à diaphragme (8) est constituée par deux unités à osmose inversée disposées en parallèle et présentant chacune une entrée connectée à un troisième conduit (16'), une sortie connectée au second conduit (12) et une évacuation connectée à un premier conduit d'évacuation (10).

7. Dispositif selon la revendication 1, **caractérisé en ce que** la troisième station d'ultrafiltration (13) comprend une membrane et présente une entrée connectée au second conduit (12), une sortie directement connectée à la valve de distribution (14) et une évacuation connectée à un deuxième conduit d'évacuation (10').
